# EUROPEAN PATENT SPECIFICATION

(11) **EP 1 569 074 B1**
(45) Date of publication and mention of the grant of the patent: **20.08.2008**
(21) Application number: 04002350.9
(22) Date of filing: 03.02.2004
(51) Int. Cl.: G06F 3/045

(54) **Noise-resistant touch-pad using capacitance**
Störungsresistente berührungsempfindliche Fläche unter Verwendung der Kapazitanz
Surface tactile résistante au bruit, utilisant la capacité électrique

(43) Date of publication of application: 31.08.2005
(73) Proprietor: High Tech Computer Corp., Taoyuan (TW)
(72) Inventor: Chang, Wei-Chih, Sindian City Taipei County 231 (TW); Wang, Wei-Chian, Sindian City Taipei County 231 (TW)
(74) Representative: Müller - Hoffmann & Partner

(56) References cited:
- EP-A- 0 309 946
- GB-A- 1 447 525
- US-A1- 2003 071 797
- TIETZE; SCHENK: 'Kapitel 16: Stromversorgung' HALBLEITER-SCHALTUNGSTECHNIKEN 2002, pages 919 - 922
- KUNDERT K.: 'Power Supply Noise Reduction' THE DESIGNER'S GUIDE 04 January 2004, pages 1 - 12

## Description

### BACKGROUND OF THE INVENTION

### Field of the Invention

The invention relates to a film positioning device, and more particularly to a film positioning device having a quick response speed.

### Description of the Related Art

A cursor positioning device, such as a mouse or a film positioning device, is widely used in the man-machine interface to facilitate the communication between the user and the electrical device. The film positioning device includes two resistive films or two capacitive films for detecting coordinates of a point contacted by the user.

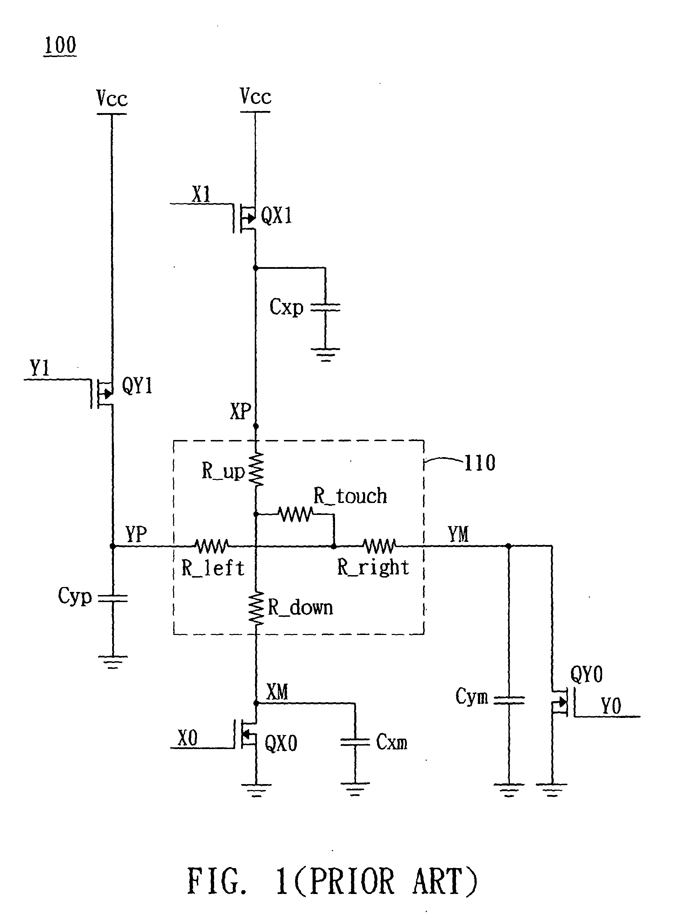

FIG. 1 shows a circuit diagram of a resistive film positioning device 100, which includes a film 110. The film 110 includes an X film and a Y film. The X film and the Y film are plane resistors and do not contact each other in a natural state. The resistance on the X film varies with the variation of the X coordinate but does not depend on the variation of the Y coordinate. The resistance on the Y film varies with the variation of the Y coordinate but does not depend on the variation of the X coordinate. The film positioning device further includes transistors QX0, QX1, QY0, QY1 and capacitors Cxp, Cxm, Cyp and Cym for detecting a point contacted by a user and isolating the noises, wherein the transistors QX0, QX1, QY0 and QY1 are controlled by signals X0, X1, Y0 and Y1, respectively.

When the user touches the film positioning device 100, the X film is electrically connected to the Y film at a contact point, and the resistor of the contact point is R_touch. In the X film, the resistor above the contact point is R_up, and the resistor below the contact point is R_down. In the Y film, the resistor at the right-hand side of the contact point is R_right, and the resistor at the left-hand side of the contact point is R_left. The film positioning device 100 may obtain the X coordinate of the contact point according to the ratio of the resistor R_up to the resistor R_down, and the Y coordinate of the contact point according to the ratio of the resistor R_right to the resistor R_left.

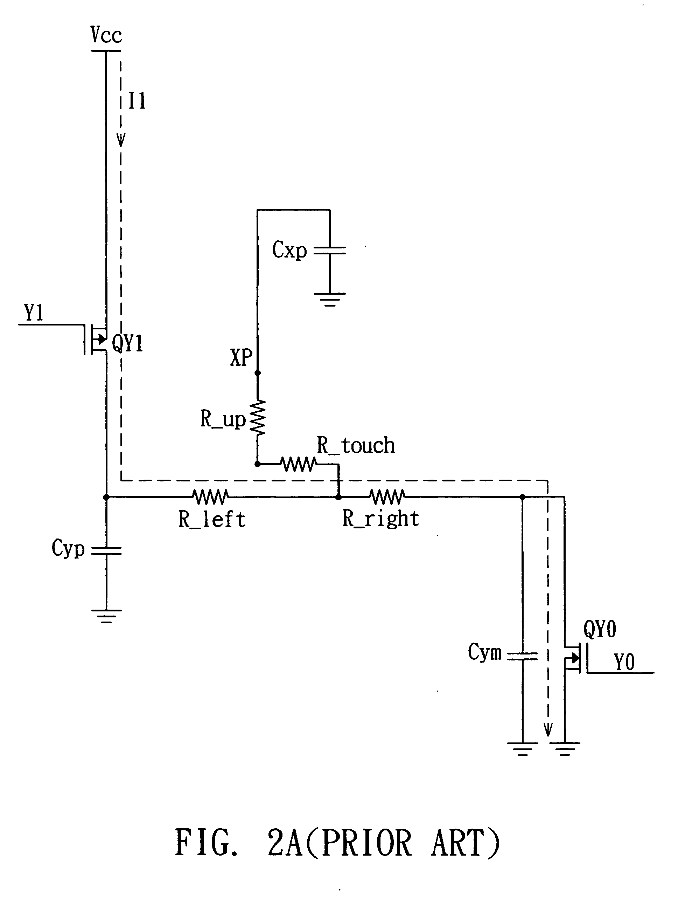

FIG. 2A shows an equivalent circuit diagram of the film positioning device when the X coordinate of a contact point is detected. When the X coordinate of the contact point is detected, the transistors QY0 and QY1 are turned on, and then the current I1 flows to the ground via QY1, R_left, R_right and QY0. At this time, the X coordinate of the contact point may be obtained by detecting the voltage at the XP point. In addition, the X coordinate of the contact point also may be obtained by detecting the voltage at the XM point.

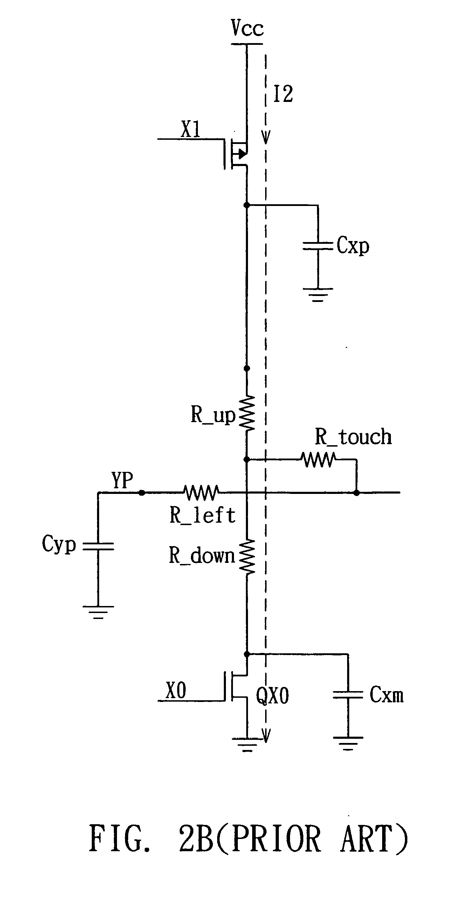

FIG. 2B shows an equivalent circuit diagram of the film positioning device when the Y coordinate of the contact point is detected. When the Y coordinate of the contact point is detected, the transistors QXO and QX1 are turned on, and then the current 12 flows to the ground via QX1, R_up, R_down and QX0. At this time, the Y coordinate of the contact point may be obtained by detecting the voltage at the YP point. In addition, the Y coordinate of the contact point also may be obtained by detecting the voltage at the YM point.

Because the film positioning device is applied to the electrical device, a lot of noises are often coupled to cause errors in the obtained coordinates. The capacitors Cxp, Cxm, Cyp and Cym are used to isolate noises and ensure the precision of the coordinates. As the capacitances of the capacitors get larger, the capability of isolating noises gets greater, but the response speed of the positioning device gets slower.

As shown in the example of FIG. 2A, when the X coordinate is detected, the capacitor Cyp is charged to about the level of the power source Vcc. When a next coordinate is to be detected, the transistors QY1 and QY2 are turned off, so the capacitor Cyp has to be discharged through the impedances of R_left, R_touch, Cxp, and the like. However, sometimes the force applied from the user to the film positioning device is too small and thus makes the impedance of R_touch very large, thereby lengthening the discharge time of the capacitor Cyp. If the discharge time of the capacitor Cyp is lengthened, the waiting time for the next coordinate to be detected is also lengthened, thereby causing the problem of the insufficiently quick response speed of the positioning device.

Similarly, when the Y coordinate is detected, the capacitor Cxp is charged to about the level of the power source Vcc. If the resistor R_touch is too large, the problem of insufficiently quick response speed of the positioning device owing to the lengthened discharge time will be caused.

Although the response speed of the positioning device may be increased when the capacitances of the capacitors Cxp, Cxm, Cyp and Cym are reduced, the capability for isolating the noises and thus the positioning precision will be deteriorated. It is problematic if the capacitances are enlarged because the response speed of the positioning device will become too slow.

US 2003/071797 discloses a touch-point detecting method that is applicable to a resistive touch panel with a touch-point detecting apparatus comprising a plurality of switches. By selectively enabling and disabling those switches, the present method comprises the steps of determining whether an external force is exerted on the touch panel, determining whether the external force is within a predetermined threshold, producing X-coordinate, and producing Y-coordinate.

EP 0 309 946 discloses a pressure-sensitive input apparatus comprising an X-coordinate detection resistive member connected to mutually parallel vertical electrodes and a Y-coordinate detection resistive member connected to mutually parallel horizontal electrodes, for detecting the position of a point depressed by a stylus or the like, by detecting changes in the resistance values of these resistive members, switches are provided for on-off control of the current flowing into or out of both ends of the X-coordinate detection resistive member and the Y-coordinate detection resistive member, and a voltage detection circuit detects the voltage between the X-coordinate detection resistive member and the Y-coordinate detection resistive members. Multiple input is detected according to the results obtained from the voltage detection means when the currents are switched by the switching means.

### SUMMARY OF THE INVENTION

It is therefore an object of the invention to provide a film positioning device capable of isolating the noise and increasing the response speed.

The invention defined in independent claim 1 achieves the above-identified object.

Other objects, features, and advantages of the invention will become apparent from the following detailed description of the preferred but non-limiting embodiment. The following description is made with reference to the accompanying drawings.

### BRIEF DESCRIPTION OF THE DRAWINGS

FIG. 1 shows a circuit diagram of a resistive film positioning device.

FIG. 2A shows an equivalent circuit diagram of the film positioning device when the X coordinate of a contact point is detected.

FIG. 2B shows an equivalent circuit diagram of the film positioning device when the Y coordinate of the contact point is detected.

FIG. 3 shows a circuit diagram of a film positioning device according to a preferred embodiment of the invention.

FIG. 4A shows an equivalent circuit diagram of the film positioning device when the X coordinate of the contact point is detected.

FIG. 4B shows an equivalent circuit diagram of the film positioning device when the Y coordinate of the contact point is detected.

### DETAILED DESCRIPTION OF THE INVENTION

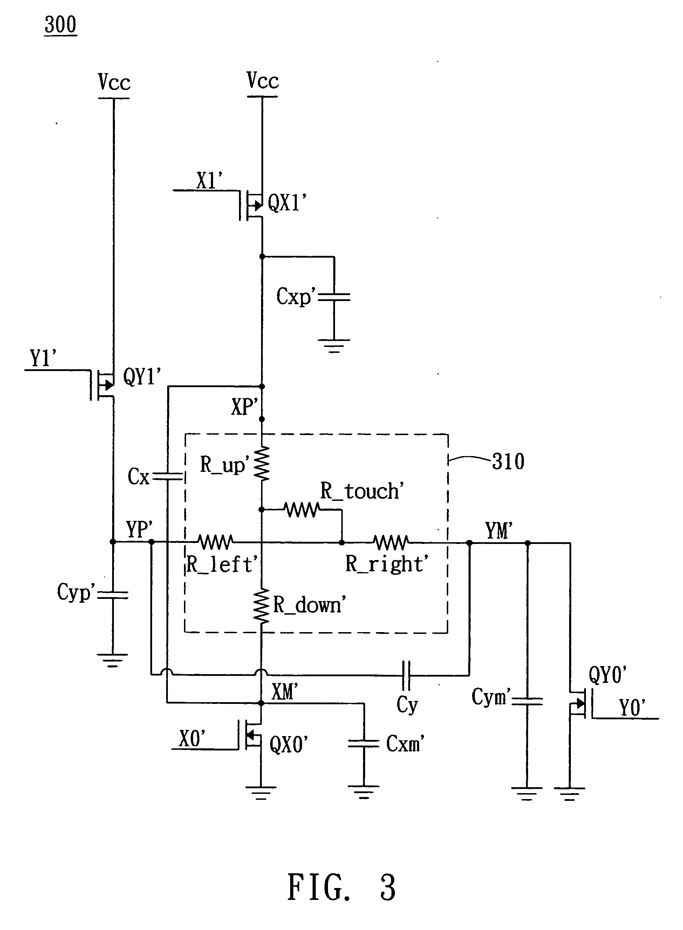

FIG. 3 shows a circuit diagram of a film positioning device according to a preferred embodiment of the invention. The film positioning device 300 includes a film 310, which includes an X film and a Y film. The X film and Y film are plane resistors and do not contact each other in a natural state.

The resistance on the X film varies with the variation of the X coordinate but does not depend on the variation of the Y coordinate. The resistance on the Y film varies with the variation of the Y coordinate but does not depend on the variation of the X coordinate. The film positioning device further includes transistors QX0', QX1', QY0' and QY1' and capacitors Cx and Cy for detecting a point contacted by a user and isolating the noises, wherein the transistors QX0', QX1', QY0' and QY1' are controlled by signals X0', X1', Y0' a Y1', respectively.

When the user touches the film positioning device 300, the X film is electrically connected to the Y film at a contact point, and the resistor of the contact point is R_touch'. In the X film, the resistor above the contact point is R_up', and the resistor below the contact point is R_down'. In the Y film, the resistor at the right-hand side of the contact point is R_right', and the resistor at the left-hand side of the contact point is R_left'. The film positioning device 300 may obtain the X coordinate of the contact point according to the ratio of the resistor R_up' to the resistor R_down', and the Y coordinate of the contact point according to the ratio of the resistor R_right' to the resistor R_left'.

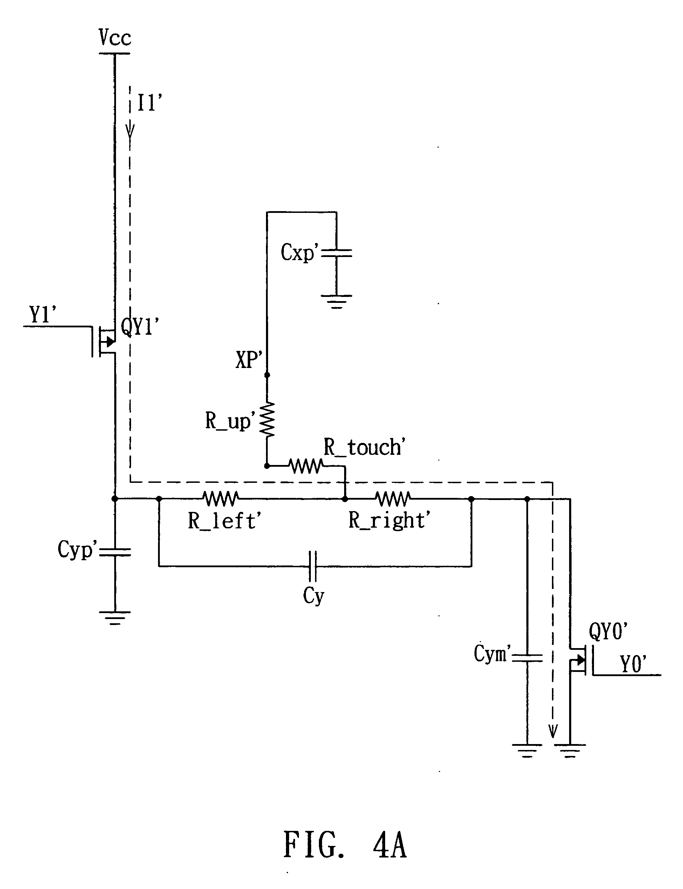

FIG. 4A shows an equivalent circuit diagram of the film positioning device when the X coordinate of the contact point is detected. When the X coordinate of the contact point is detected, the transistors QY0' and QY1' are turned on, and then the current I1' flows to the ground via QY1', R_left', R_right' and QY0'. At this time, the X coordinate of the contact point may be obtained by detecting the voltage at the XP' point. In addition, the X coordinate of the contact point also may be obtained by detecting the voltage at the XM' point.

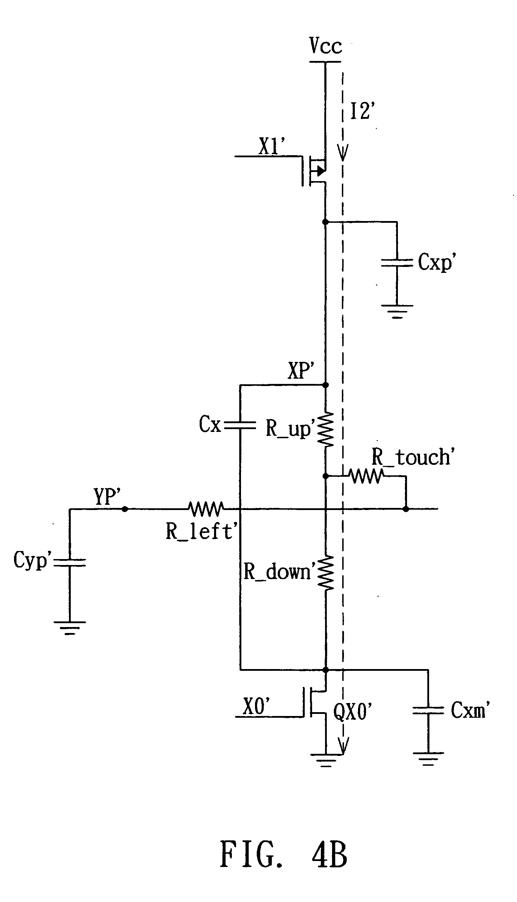

FIG. 4B shows an equivalent circuit diagram of the film positioning device when the Y coordinate of the contact point is detected. When the Y coordinate of the contact point is detected, the transistors QX0' and QX1' are turned on, and then the current 12' flows to the ground via QX1', R_up', R_down' and QX0'. At this time, the Y coordinate of the contact point may be obtained by detecting the voltage at the YP' point. In addition, the Y coordinate of the contact point also may be obtained by detecting the voltage at the YM' point.

Because the film positioning device is applied to the electrical device, a lot of noises are often coupled to cause errors in the obtained coordinates. If the film positioning device is applied to, for example, a touch panel of a personal digital assistant (PDA), the caused noise influences will be larger. A liquid crystal display, which has high-frequency signals such as pixel clock signals, horizontal synchronization signals, vertical synchronization signals, and the like so as to maintain an update frequency of, for example, 30 frames per second, is located under the touch panel. The high-frequency signals tend to be coupled to the film positioning device to cause errors in the detected coordinates.

The invention utilizes newly added capacitors Cx and Cy to isolate the noises, and thus to ensure the precision of the coordinates, shorten the discharge time of these capacitors, and increase the response speed of the positioning device 300.

As shown in the example of FIG. 4A, when the X coordinate is detected, the capacitor Cy is charged to about the level of the power source Vcc. When a next coordinate is to be detected, the transistors QY1' and QY2' are turned off, so the capacitor Cy may be discharged through the impedances of R_left' and R_right' without being discharged through the R_touch' as performed in the prior art method. Thus, it is possible to avoid the problem of the slow discharge speed caused by the condition when the force supplied by the user is too small and thus makes the impedance of R_touch' too large.

As similarly shown in the example of FIG. 4B, when the Y coordinate is detected, the capacitor Cx is charged to about the level of the power source Vcc. When a next coordinate is to be detected, the transistors QX1' and QX2' are turned off, so the capacitor Cx may be discharged through R_up' and R_down' without being discharged through R_touch' as performed in the prior art method. Thus, it is possible to avoid the problem of the slow discharge speed caused by the condition when the force supplied by the user is too small and thus makes the impedance of R_touch' too large.

In addition, the embodiment may further include capacitors Cxp', Cxm', Cyp' and Cym' with smaller capacitances to make the effect against noises better without influencing the response speed of the positioning device.

The disclosed film positioning device according to the embodiment of the invention changes the coupling manner of the capacitors against the noises and makes its discharge time free from being restricted by the magnitude of the impedance of R_touch', so the positioning speed may be increased and good ability against noises may be obtained.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A film positioning device (300) for detecting a position of a contact point, the device comprising:
an X film having a first X terminal and a second X terminal;
a Y film having a first Y terminal and a second Y terminal;
a first Y switch (QY0') coupled between the first Y terminal and a ground;
a second Y switch (QY1') coupled between the second Y terminal and a power source (Vcc);
a first X switch (QX0') coupled between the first X terminal and the ground;
a second X switch (QX1') coupled between the second X terminal and the power source (Vcc);
**characterised in that** it further comprises:
a first X capacitor (Cx) coupled between the first X terminal and the second X terminal; and
a second Y capacitor (Cy) coupled between the first Y terminal and the second Y terminal;
a first capacitor (Cxw') coupled to the first x terminal;
a second capacitor (cxp') coupled to the second x terminal;
a third capacitor (cym') coupled to the first Y terminal;
a fourth capacitor (cyp') coupled to the second Y terminal;
wherein when the film positioning device (300) detects an X coordinate of the contact point, the first Y switch (QY0') and the second Y switch (QY1') are turned on, and then the X coordinate is obtained according to a voltage at the first X terminal or the second X terminal;
wherein when the film positioning device (300) detects a Y coordinate of the contact point, the first X switch (QX0') and the second X switch (QX1') are turned on, and then the Y coordinate is obtained according to a voltage at the first Y terminal or the second Y terminal.

2. The film positioning device according to claim 1, wherein the X film and the Y film are plane resistors.

3. The film positioning device according to claim 1, wherein the first Y switch (QY0'), the second Y switch (QY1'), the first X switch (QX0') and the second X switch (QX1') are transistors.

## Patentansprüche

1. Filmortungseinrichtung (300) zur Detektion einer Position eines Kontaktpunktes, die aufweist:
einen X-Film mit einem ersten X-Anschluss und einem zweiten X-Anschluss;
einen Y-Film mit einem ersten Y-Anschluss und einem zweiten Y-Anschluss;
einen ersten Y-Schalter (QY0'), der zwischen den ersten Y-Anschluss und eine Masse geschaltet ist;
einen zweiten Y-Schalter (QY1'), der zwischen den zweiten Y-Anschluss und eine Versorgungsquelle (Vcc) geschaltet ist;
einen ersten X-Schalter (QX0'), der zwischen den ersten X-Anschluss und die Masse geschaltet ist;
einen zweiten X-Schalter (QX1'), der zwischen den zweiten X-Anschluss und die Versorgungsquelle (Vcc) geschaltet ist;
**dadurch gekennzeichnet, dass** die Einrichtung zudem aufweist:
einen ersten X-Kondensator (Cx), der zwischen den ersten X-Anschluss und den zweiten X-Anschluss geschaltet ist; und
einen zweiten Y-Kondensator (Cy), der zwischen den ersten Y-Anschluss und den zweiten Y-Anschluss geschaltet ist;
einen ersten Kondensator (Cxw'), der an den ersten X-Anschluss angeschlossen ist;
einen zweiten Kondensator (Cxp'), der an den zweiten X-Anschluss angeschlossen ist;
einen dritten Kondensator (Cym'), der an den ersten Y-Anschluss angeschlossen ist;
einen vierten Kondensator (Cyp'), der an den zweiten Y-Anschluss angeschlossen ist;
wobei im Falle, dass die Filmortungseinrichtung (300) eine X-Koordinate des Kontaktpunktes detektiert, der erste Y-Schalter (QY0') und der zweite Y-Schalter (QY1') eingeschaltet sind und die X-Koordinate dann aus einer Spannung am ersten X-Anschluss oder dem zweiten X-Anschluss erhalten wird;
wobei im Falle, dass die Filmortungseinrichtung (300) eine Y-Koordinate des Kontaktpunktes detektiert, der erste X-Schalter (QX0') und der zweite X-Schalter (QX1') eingeschaltet sind, und die Y-Koordinate aus einer Spannung am ersten Y-Anschluss oder dem zweiten Y-Anschluss erhalten wird.

2. Filmortungseinrichtung nach Anspruch 1, wobei der X-Film und der Y-Film ebene Widerstände sind.

3. Filmortungseinrichtung nach Anspruch 1, wobei der erste Y-Schalter (QY0'), der zweite Y-Schalter (QY1'), der erste X-Schalter (QX0') und der zweite X-Schalter (QX1') Transistoren sind.

## Revendications

1. Dispositif de positionnement de film (300) pour détecter une position d'un point de contact, ce dispositif comprenant :
un film X avec une première borne X et une seconde borne X ;
un film Y avec une première borne Y et une seconde borne Y ;
un premier interrupteur Y (QY0') monté entre la première borne Y et une terre ;
un second interrupteur Y (QY1') monté entre la seconde borne Y et une source de courant (Vcc) ;
un premier interrupteur X (QX0') monté entre la première borne X et la terre ;
un second interrupteur X (QX1') monté entre la seconde borne X et la source de courant (Vcc) ;
**caractérisé en ce qu'**il comprend aussi :
un premier condensateur X (x) monté entre la première borne X et la seconde borne X ; et
un second condensateur (y) monté entre la première borne Y et la seconde borne Y ;
un premier condensateur (Cxm') relié à la première borne X ;
un deuxième condensateur (Cxp') relié à la seconde borne X ;
un troisième condensateur (Cym') relié à la première borne Y ;
un quatrième condensateur (Cyp') relié à la seconde borne Y ;
étant précisé que lorsque le dispositif de positionnement de film (300) détecte une coordonnée X du point de contact, le premier interrupteur Y (QY0') et le second interrupteur Y (QY1') sont fermés et la coordonnée X est alors obtenue suivant une tension au niveau de la première ou de la seconde borne X ;
et que lorsque le dispositif de positionnement de film (300) détecte une coordonnée Y du point de contact, le premier interrupteur X (QX0') et le second interrupteur X (QX1') sont fermés et la coordonnée Y est alors obtenue suivant une tension au niveau de la première ou de la seconde borne Y.

2. Dispositif de positionnement de film selon la revendication 1, dans lequel le film X et le film Y sont des résistances plates.

3. Dispositif de positionnement de film selon la revendication 1, dans lequel le premier interrupteur Y (QY0'), le second interrupteur Y (QY1'), le premier interrupteur X (QX0') et le second interrupteur X (QX1') sont des transistors.
